(19) Europäisches Patentamt

European Patent Office

Office européen des brevets

(11) **EP 1 235 371 A1**

(12) **EUROPEAN PATENT APPLICATION**
published in accordance with Art. 158(3) EPC

(43) Date of publication:
28.08.2002 Bulletin 2002/35

(51) Int Cl.7: **H04H 7/00**, H04H 1/00,
G06F 13/00

(21) Application number: 01958552.0

(22) Date of filing: 28.08.2001

(86) International application number:
PCT/JP01/07358

(87) International publication number:
WO 02/021740 (14.03.2002 Gazette 2002/11)

(84) Designated Contracting States:
AT BE CH CY DE DK ES FI FR GB GR IE IT LI LU
MC NL PT SE TR
Designated Extension States:
AL LT LV MK RO SI

(30) Priority: 01.09.2000 JP 2000266326
27.09.2000 JP 2000295284
18.05.2001 JP 2001149335

(71) Applicant: **MATSUSHITA ELECTRIC INDUSTRIAL
CO., LTD.**
Kadoma-shi, Osaka 571-8501 (JP)

(72) Inventors:
• **TSUKIDATE, Ryota**
**Kawasaki-shi Kanagawa 212-0023 (JP)**
• **NISHI, Hiroyuki**
**Suginami-ku Tokyo 168-0065 (JP)**

(74) Representative: **Grünecker, Kinkeldey,
Stockmair & Schwanhäusser Anwaltssozietät
Maximilianstrasse 58
80538 München (DE)**

(54) **RECEPTION TERMINAL SIMULATOR, SENDING SCHEDULE MAKING DEVICE, RECEPTION TERMINAL, DATA TRANSMISSION/RECEPTION SYSTEM COMPRISING THEM**

(57)    In a data transmission system, the situation of a receiving terminal is made known or precisely estimated to control delivery data or prepare a data broadcast schedule, thereby preventing troubles in data transmission.

For transmission of data in a data transmission system using one-way communication, the information on transmitted data is controlled in a database and the receive, storage, and delete processing at the receiving terminal is simulated using the information on the data, thereby allowing the situation of the receiving terminal to be known. Using this, the subsequent delivery plan is made or a data delivery schedule is prepared using a simulation result. This realizes an efficient data transmission. The information on data includes an expiry date and conditions for receiving data (such as regions or receiving-terminal types).

FIG. 1

## Description

## TECHNICAL FIELD

The present invention relates, in systems for using a one-way communication to transmit data, to a receiving-terminal simulator and a delivery scheduler, which are adapted to take into account the state of a receiving terminal to control the delivery of data, and to a data transmission system employing the same.

## BACKGROUND ART

Conventional data transmission systems provide data to be delivered with an expiry date and send the data to receiving terminals. The receiving terminal is provided with a delete processing schedule control portion and a delete processing portion to periodically perform delete processing on expired data. In such a data communication, since data is delivered in one way, the data transmitting side cannot take into account the file delete processing performed at the aforementioned terminal and therefore cannot know how many files have been accumulated at the terminal. In addition, the receiving terminal is controlled entirely by the receiving terminal itself, and the data transmitting side delivers data without taking the state of the receiving terminal into account.

Furthermore, in the conventional data transmission system, when preparing a delivery schedule for data to be delivered, the data transmitting side makes a plan for the delivery only in consideration of whether the data being transmitted can be accommodated in the frame of delivery (transmitted data bandwidth).

That is, the amount of data that can be transmitted in 1Mbp bandwidth in one hour is 1Mbits*60*60/8 = 450 Mbytes. Upon determining a data broadcast schedule, it is sufficient to allocate data in a broadcast frame so as to be accommodated in the data size that can be transmitted in a broadcast frame desired for the broadcast.

However, in the aforementioned conventional data transmission system for transmitting data in a one way communication, since the receiving terminal cannot notify the state thereof, the state of a storage area of the receiving terminal cannot be taken into account correctly. Thus, consider a case where a terminal receives data sent in a one way communication to store and save the data, and the data has been sent only because the data can be sent. In this case, regardless of the absence of a sufficient free space in a storage area of the receiving terminal, it is possible to deliver data exceeding the capacity of the free space. Thus, there is a problem that this results in failing to store the data at the aforementioned receiving terminal. For example, suppose that the free space available is only 300 Mbytes for the amount of data deliverable of 450 Mbytes. In this case, it is obvious that sending the data (450 Mbytes), which can be sent, as it is would cause the storage of the data to be failed.

## DISCLOSURE OF THE INVENTION

The present invention was developed in view of the aforementioned conventional problems. It is therefore a first object of the present invention to provide a data transmission system in which a device on the data transmitting side controls data to be delivered in consideration of the state of a receiving terminal to prevent the occurrence of troubles in data transmission.

A second object of the present invention is to prepare a data delivery schedule which enables a device on the data transmitting side to estimate correctly the state of a receiving terminal and allows the receiving terminal to receive and accumulate data correctly.

To achieve the aforementioned objects, the present invention provides a system for transmitting data using a one-way communication. The system includes a data control portion for controlling the information on transmitted data and data to be transmitted from now, and a data storage portion for storing the transmitted data, the data to be transmitted from now, and information on the data. The system further includes a receiving-terminal simulation portion for simulating the operation of receive, storage, and delete processing at a receiving terminal in accordance with the information.

This makes it possible to simulate what expiry date the transmitted data has, until when the data will exist on the receiving terminal, and to which region the data has been transmitted, thereby making it possible to know the situation of the storage area of the receiving terminal. However, the above-mentioned situation is based on the assumption that all the storage and delete processing work properly. Knowing the situation of the storage area will make it possible to know how much more data can be transmitted and accommodated in the storage area. It is also made possible to know when the desired free space is available in the storage area.

To achieve the aforementioned objects, the present invention provides a delivery scheduler for use in a system for transmitting data using one-way communication. The delivery scheduler includes a data storage portion for storing information on data, a data control portion for controlling data, a receiving-terminal simulation portion for simulating the state of a receiving terminal and a delivery control portion for preparing a delivery schedule of data using a simulation result.

This configuration of the delivery scheduler according to the present invention makes it possible to make and implement a transmission plan (a delivery schedule) by which the receiving terminal can positively receive and deliver data.

## BRIEF DESCRIPTION OF THE DRAWINGS

Fig. 1 is a block diagram illustrating the overall configuration of a data broadcast system according to a first embodiment of the present invention.

Fig. 2 is a block diagram illustrating the configuration of a receiving terminal corresponding to the data transmission system according to the aforementioned embodiment.

Fig. 3 is a view illustrating an exemplary list of control data entries according to the aforementioned embodiment.

Fig. 4 is a view illustrating an exemplary list of delivered registration data according to the aforementioned embodiment.

Fig. 5 is an explanatory view illustrating a first example of a file simulation according to the aforementioned embodiment.

Fig. 6 is an explanatory view illustrating the first example of the file simulation according to the aforementioned embodiment.

Fig. 7 is a block diagram illustrating the overall configuration of a data broadcast system having a delivery scheduler according to a second embodiment of the present invention.

Fig. 8 is a view illustrating an exemplary list of control data entries according to the aforementioned embodiment.

Fig. 9 is a view illustrating an exemplary list of registration data according to the aforementioned embodiment.

Fig. 10 is a view illustrating an example of broadcast frame information according to the aforementioned embodiment.

Fig. 11 is an explanatory flow diagram illustrating a broadcast scheduling operation according to the aforementioned embodiment.

Fig. 12 is an explanatory flow diagram illustrating a processing order decision operation according to the aforementioned embodiment.

Fig. 13 is an explanatory flow diagram illustrating a free space simulation operation according to the aforementioned embodiment.

Fig. 14 is a view illustrating the period of time during which data is stored in a storage area of a receiving terminal according to the aforementioned embodiment.

Fig. 15 is a view illustrating an example of control information saved in a delivery control portion according to the aforementioned embodiment.

## PREFERRED EMBODIMENTS OF THE INVENTION

[EMBODIMENT 1]

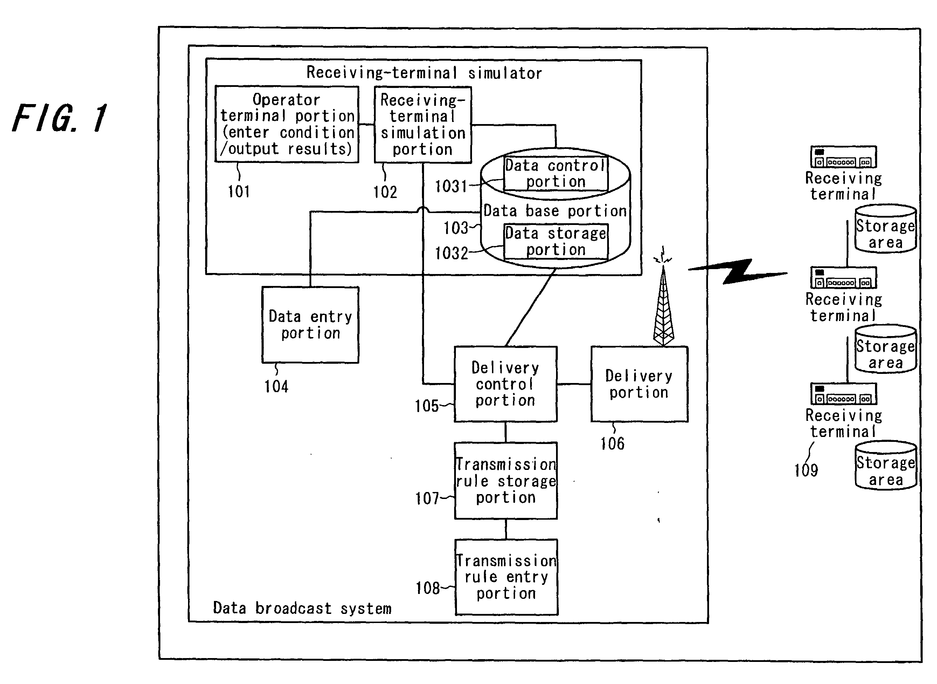

Now, the present invention will be explained below with reference to the accompanying drawings in accordance with the embodiments. Incidentally, the present invention is not limited to these embodiments, and various modifications can be made without departing from the scope thereof. Fig. 1 is a block diagram illustrating the overall configuration of a data transmission system according to a first embodiment of the present invention. In this embodiment, a data transmission system including a receiving terminal simulator is explained with reference to a data broadcast system for transmitting data in the form of a broadcast.

This data broadcast system employs a scheme for transmitting data in a one way communication to receive the data at a receiving terminal, being configured as shown in Fig. 1. A receiving-terminal simulator includes an operator terminal portion 101 for inputting simulation conditions and outputting simulation results, a receiving-terminal simulation portion 102 for performing actual simulation of the state of the receiving terminal, and a database portion 103 for storing and controlling the information on delivery data. The data broadcast system is composed of this receiving-terminal simulator, a data entry portion 104, a delivery control portion 105, and a delivery portion 106. The database portion 103 includes a data control portion 1031 for controlling information on data to be transmitted from now and a data storage portion 1032 for storing the transmitted data, the data to be transmitted from now, and the information on the aforementioned data. The following explanations will be given with reference to the data control portion 1031 and the data storage portion 1032 as the database portion 103. Data that is transmitted from the data broadcast system is received and stored in a receiving terminal 109. It is to be understood that the operator terminal portion 101, the receiving-terminal simulation portion 102, the data control portion 1031, and the data storage portion 1032 may be incorporated into the same device or configured separately and coupled to each other over a network. On the other hand, multiple operator terminal portions 101, database portions 103, and data entry portions 104 may be available. In addition, the data storage portion 1032, the data control portion 1031, and the receiving-terminal simulation portion 102 may be provided as functional portions in a general purpose computer for executing each function by a program installed in the computer to simulate the receiving capacity of the receiving terminal.

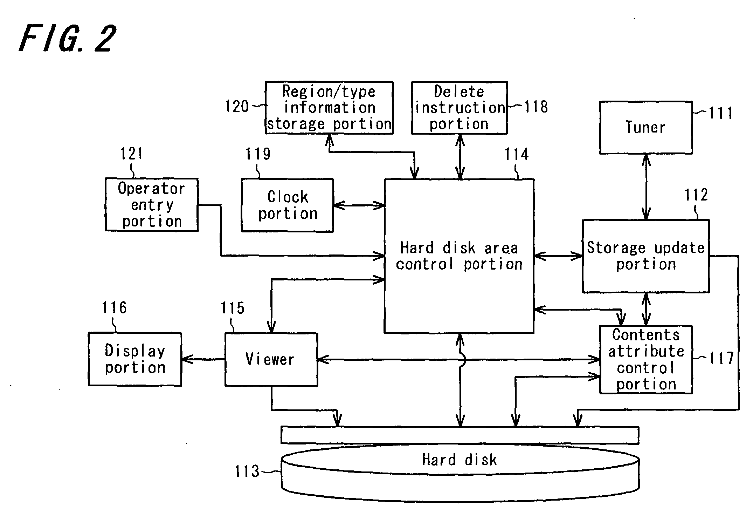

Fig. 2 is a block diagram illustrating the configuration of the receiving terminal 109 corresponding to the data transmission system according to the first embodiment of the present invention. The receiving terminal 109 constitutes a portion for receiving a broadcast wave from the data broadcast system. The receiving terminal 109 includes a tuner 111 for receiving the broadcast wave to select stations, a storage update portion 112 for storing or updating the data (contents) of received broadcast programs, a hard disk 113 serving as a storage area in which data is stored, a hard disk area control portion 114 having a CPU and serving as a storage area control portion for controlling operations such as reading, writing, or deleting data on the hard disk 113, a viewer 115 for reading data from the hard disk 113 for display, and a display portion 116 for displaying the read data.

Furthermore, the receiving terminal 109 includes a contents attribute control portion 117 for controlling the state of reference to and other attributes of the data stored in the hard disk 113, a clock portion 119 for providing the clock information that the hard disk area control portion 114 uses to determine whether the data stored on the hard disk 113 has been expired, a region/type information storage portion 120 for storing information on regions and types, and an operator entry portion 121 for the entry of data. The contents attribute control portion 117 controls the state of reference to or attributes of the data stored in the hard disk 113. As an example, the contents attribute control portion 117 monitors or controls what kind of reference is being made to the storage data (e.g., data is currently being written or read). The region/type information storage portion 120 stores information on regions for identifying the region in which the receiving terminal 109 is installed and information on types for indicating the type of the receiving terminal 109. Incidentally, the region/type information storage portion 120 may be separated into region information storage means for storing information on regions for identifying the region in which the receiving terminal is installed and type information storage means for storing information on types for indicating the type of the receiving terminal.

Now, explained below are the operation of the receiving terminal 109 and the data control executed by the receiving terminal 109. For one-way data broadcast systems, it is impossible to ensure that the data broadcast system provides instructions to delete data. This is because all the receiving terminals 109 would not positively receive and execute the delete instructions or the like that are transmitted in the form of a broadcast. In this context, data to be transmitted is provided with an expiry date and then transmitted. The receiving terminal 109 checks periodically the expiry date of the stored data and then deletes or discards expired data. Accordingly, the data that has expired and becomes unnecessary is deleted, thereby making it possible to use effectively the storage area of the receiving terminal 109.

In this case, the hard disk area control portion 114 checks periodically the expiry date of the data stored in the hard disk 113. The hard disk area control portion 114 recognizes that the expiry date of the expired data has actually ended in accordance with the clock information provided by the clock portion 119, and then provides an instruction to the storage update portion 112, allowing the storage update portion 112 to delete and discard the data. For the purpose of deleting the data that has expired and become unnecessary, the clock information provided by the clock portion 119 includes mainly the current date and time.

In addition, the receiving terminal 109 has stored the information for identifying the region and the type of the receiving terminal 109 in the region/type information storage portion 120. In accordance with the region data provided by the region/type information storage portion 120, the hard disk area control portion 114 checks the information, provided to the transmitted data, on the transmission destination and the type of a receiving terminal to allow only corresponding terminals to receive and store the data. In this embodiment, the information on the type of receiving terminals represents how much storage capacity is provided for a terminal. The receiving-terminal type information allows the data transmitting side to transmit an amount of data suitable for the storage capacity of the terminal. In addition to the information as to how much storage capacity is provided for the terminal, the receiving-terminal type information can include the information on the configuration of the receiving terminal 109 and on the features of the receiving terminal 109 such as an external connection form.

There is also another operation of the hard disk area control portion 114 available as an alternative to the operation of deleting expired data. That is, the hard disk area control portion 114 can check the free space of the hard disk 113, allowing the expired storage data to stay in the hard disk 113 (i.e., not to be deleted) if sufficient free space is available. It is also made possible for the hard disk area control portion 114 to check the free space of the hard disk 113 to delete expired data only when the hard disk 113 has been used up or is being used up. On the other hand, upon deleting expired data, the hard disk area control portion 114 can also be adapted to exclude data being referenced, such as data currently being read, from being deleted or discarded in accordance with data from the contents attribute control portion 117.

In addition to the transmission destination information and receiving-terminal type information, the receiving terminal 109 can store, as information for identifying reception and storage, the information such as on the family member or the hobby of the audiences who use the receiving terminal 109. The data to be received and stored may be identified in accordance with the information for identifying reception and storage. Thus, the information used for identification is not limited.

The receiving terminal 109 performs receive and delete processing outside the serviceable period of time of the terminal or during when the terminal is not used by an operator. Here, "outside the serviceable period of time" means when the user does not use the receiving terminal 109, when the user does not look at the display outputted on the receiving terminal 109, or when the receiving terminal 109 itself does not execute automatic processing. In this case, upon deleting expired data, the hard disk area control portion 114 repeats the periods of delete and delete stop operations alternately when the receiving terminal is on, while executing the delete operation successively when the receiving terminal is off. What is referred to by "off" here means that the user turns off the power by means of a remote controller or the like (stand-by state) without turning off the main power. It is to be understood that, when the delete processing could not be performed for some reason, this is carried out when the delete processing has been enabled. When the delete processing coincides in timing with the receive processing, the hard disk area control portion 114 may judge the circumstances each time to perform the delete processing on a priority basis or the write operation on a priority basis. For example, when the delete processing coincides in timing with the receive processing, the delete processing is executed on a priority basis when the storage capacity of the hard disk 113 is nearly used up. That is, the necessary delete processing has been completed when the receive processing is executed. In contrast to this, when the delete processing coincides in timing with the receive processing, the receive processing or write processing is executed on a priority basis when the free space of the hard disk 113 is still sufficiently available.

Upon receiving and storing data, it is also possible that the hard disk area control portion 114 checks the free space of the hard disk 113 to delete expired data when the hard disk 113 is expected to be used up.

However, this is not limited to the receiving terminal 109 which performs such processing. Now, explained below is the flow of the processing from the registration to the transmission of data in the data broadcast system according to this embodiment. The data to be transmitted is registered from the data entry portion 104 to the database portion 103. Data may be entered to the data entry portion 104 directly, via a storage medium, or over a network.

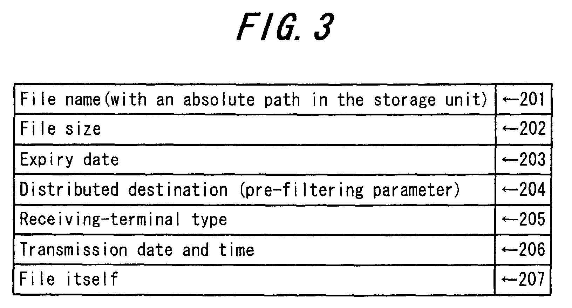

At the time of the data entry, as shown in Fig. 3, registered are a file name 201, a file size 202, an expiry date 203, a distribution destination 204, a receiving-terminal type 205, and a file itself 207. Instead of registering the file itself 207, the file can be saved in another location, and the information for linking to the location and the information and identifiers for retrieving the file may be registered. The delivery control portion 105 holds a transmission schedule indicative of when and which data is transmitted. In accordance with the schedule, the delivery control portion 105 retrieves data from the database portion 103 to add information on the expiry date 203 and the distribution destination 204 to the data being transmitted, which is then outputted to the delivery portion 106. Subsequently, the delivery portion 106 transmits the transmitted data to the receiving terminal 109. This transmission date and time is registered as a transmission date and time 206 in the database portion 103. It may be acceptable to register either a feedback transmission date and time obtained from the delivery portion or register a transmission date and time from the delivery control portion. The transmission may be executed using any communication means such as the ground wave, a satellite, or a wired line but not limited thereto. It is also to be understood that the file control entries shown in Fig. 3 are not limited to those described there and may be changed, added, or deleted as appropriate depending on the operation.

There is no means available for knowing how the data transmitted as described above is stored, due to the one-way communication. Therefore, the receiving-terminal simulator to be described later is used to take into account the state of the storage (the state of the storage area) of the receiving terminal 109, use of which is made to prepare a subsequent data transmission schedule.

To perform a simulation, at least one or more of the date and time at which the state of the receiving terminal 109 is wanted to know, the region, the receiving-terminal type, or the minimum data write unit at the receiving terminal 109 are specified at the operator terminal portion 101. Upon specifying conditions, conditions may be entered each time at the operator terminal portion 101 or conditions may be entered and registered at the operator terminal portion to call the registered condition upon simulation.

Now, described below is a simulation method performed when the date and time, the region, the receiving-terminal type, and the minimum data write unit at the receiving terminal 109 have been specified.

(1) A search is made on all the transmitted data from the transmission date and time 206 to the expiry date 207 for the occurrence of the date and time specified. These search results are taken as search results 1.

(2) A search is further performed on the search results 1 for the data to be received in the specified region. These search results are taken as search results 2.

(3) A search is further performed on the search results 2 for the data to be received by the specified receiving-terminal type. These search results are taken as search results 3.

(4) If a plurality of conditions exist for the simulation, a search is repeated on the previous search results for a current condition (in this case, no further conditions exist).

(5) The file obtained from the final search results (search results 3 in this case) will be present in the storage area of the receiving terminal 109 when received at the specified date and time by the terminal having the specified region and type, and delete processing has been performed properly.

(6) The size of the file corresponding to the search result is rounded to the minimum data write unit. The minimum data write unit means that even when a file having a size less than the minimum data write unit is written, the file will actually occupy the storage capacity equal to the minimum data write unit.

Since a mismatch between a file having a simply added size and the storage capacity actually occupied by the file occurs, it is necessary to round files to the minimum write unit.

(7) The sum of the files is the amount of use of the storage capacity.

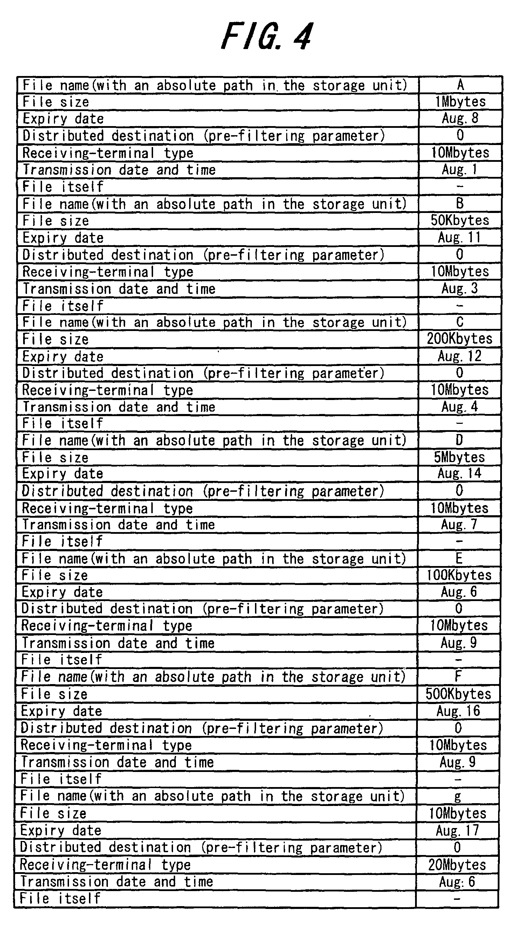

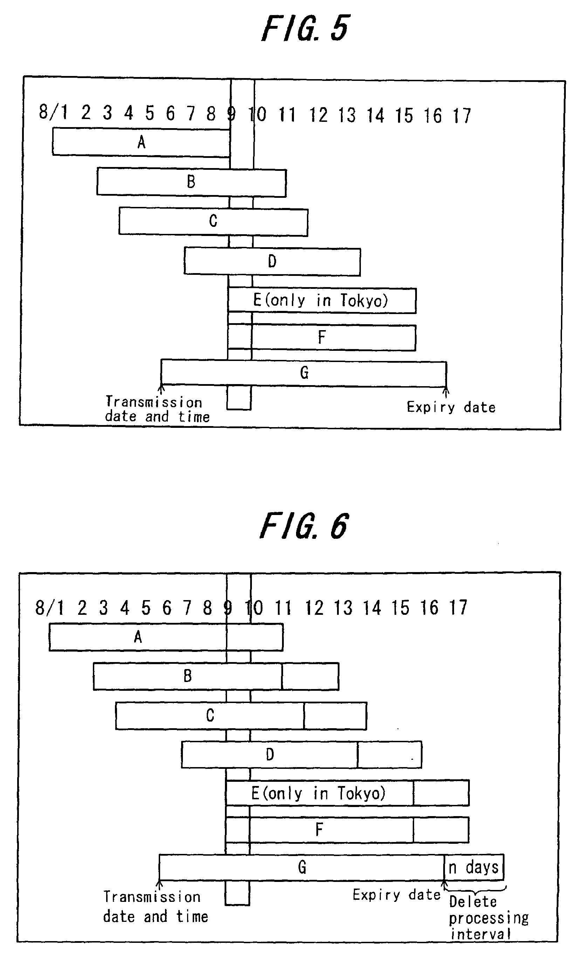

Suppose that the data having the information shown in Fig. 4 has been transmitted. Fig. 5 illustrates the period of time during which the data is stored in the storage area of the receiving terminal 109. Suppose that the conditions for simulation require a date of August 9, a terminal located at a region other than Tokyo, a receiving-terminal type having a storage capacity of 10 Mbytes, and a least write unit of 128 kbytes. (In the distribution destination of file information, Tokyo is specified as 1 and no destination as 0. In this case, files having distribution information of other than 1 meet the condition.)

As can be seen from Fig. 5, the files present on August 9 are B, C, D, E, F, and G (search results 1). A simulation of terminals located at other than Tokyo provides B, C, D, F, and G (search results 2). The files to be received by a terminal having a receiving-terminal type of 10 Mbytes are B, C, D, and F (search results 3). The amount of use of storage area can be calculated from the size of the files B, C, D, and F. The size of the file itself is 50 kbytes for B, 200 kbytes for C, 5 Mbytes (5120 kbytes) for D, and 500 kbytes for F, yielding a total of 5870 kbytes. The size of the actually occupied storage area is calculated in the following way.

The size of each file is divided by the minimum write unit. Then, any digits to the right of the decimal point would be rounded up to 1. The resulting size is multiplied by the minimum write unit. Then, all the results for the files are summed up.

(Example) 200 kbytes/128 kbytes = 1.5625

Then, the digits to the right of the decimal point are rounded up to 1. Thus,

2* 128 kbytes = 256 kbytes.

Therefore, the size occupying the storage area is 128 kbytes for B, 256 kbytes for C, 5 Mbytes for D, and 512 kbytes for F, yielding a total of 6016 kbytes.

From these results, the simulation can show that a storage area of 6016 kbytes is occupied in the 10Mbyte storage area.

There is a problematic possibility that data is received with uncertainty by the receiving terminal 109 in a one-way broadcast. However, when no data is received and therefore no storage area is occupied, less storage area is actually occupied than estimated by the simulation. Nevertheless, since less occupied storage area presents no problem to this theme, such a terminal as receiving no data is not to be taken into account in this simulation.

In addition, the delete processing is not performed every day at the receiving terminal 109 in practice. Accordingly, a simulation may be performed as follows assuming that the delete processing is not carried out for conceivable days. That is, files having a specified date and time immediately after the current delete processing will remain as expired files until the subsequent delete processing is performed. In this context, for an interval of n days from one delete processing to another, the expiry date of the aforementioned simulation is replaced by the expiry date plus n days to perform a simulation. This makes it possible to perform a simulation in consideration of the current situation of the actual delete processing. Likewise, when the audience such as of a 24-hour TV program continues to use the receiving terminal 109 and thus no delete processing is possibly performed, it is also possible to specify this period as a no-delete-processing period to perform a simulation.

For example, suppose a simulation is performed under the conditions, entered from the operator terminal portion 101, that the delete processing is performed every two days in Fig. 6, the no-delete-processing period is two days, and the delete processing is carried out at 01:00:00 on August 8. File A (having an expiry date of August 8) which does not meet the aforementioned conditions still remains in the results of this simulation on August 9. (In this embodiment, only a day is specified for the expiry date and the day include the whole day (up to 23:59:59), however, a given time may be set to the time.) From these results, the simulation tells that a storage area of 7040 kbytes (= 6016 kbytes + 1 Mbytes (1024 kbytes)) is occupied in the 10Mbyte storage area.

In the foregoing explanation, simplified file names were employed such as A, B, C, and D. However, for a file specification, /HDD1/user/A/B, as in an ordinary directory configuration, it is also possible to simulate the amount of files that exist under the directory "/HDD1". In this case, the directory "/HDD1" is specified in addition to the aforementioned entries as the conditions for the simulation. Likewise, when a plurality of storage media are present in the receiving terminal 109, a simulation can be performed under the conditions including the storage medium. At this time, a file is provided with a file name (e.g., "/HDD1") to identify the storage medium on which the file is stored or controlled in accordance with a storage medium type provided to the file control entry. Likewise, providing the file control entry with a file type (such as image or sound) will make it possible to perform simulations on which type of files and how many files are stored in the receiving terminal 109.

The results of the simulation obtained as such are outputted on the operator terminal portion 101. Consider the case where the delete processing is performed every two days at a receiving terminal 109, having a storage capacity of 10 Mbytes, located at other than Tokyo, on August 9. From the above-mentioned results, it is found that the receiving terminal 109 has a free space of about 3 Mbytes and can receive and store data, which can be accommodated in the free space, without any problem. A delivery plan is made in consideration of this result.

In some cases, the delivery control portion 105 may perform a simulation directly on the receiving terminal 109. When the delivery control portion 105 makes a delivery plan, an expected transmission date is registered to the transmission date and time of the registered data being transmitted. The state of the receiving terminal 109 at the specified date and time subsequent to the transmission date and time can be simulated, thereby making it possible, prior to the transmission, to know the state thereof to be provided after the transmission. Suppose that the aforementioned simulation shows the result that the storage area will overflow. In this case, such actions are taken as making the size of data being delivered smaller or the process wait until the delete processing is performed to provide a free space. An algorithm for the actions is not limited to that described above. It is assumed that the action algorithm is entered from a transmission rule entry portion 108 and stored in a transmission rule storage portion 107. The specified date and time can be changed successively to repeat a simulation, thereby making it possible to know when the data being transmitted is actually transmitted with certainty. It is also possible to display a plot of the state of the receiving terminal 109, on the operator terminal portion 101, such as the free space obtained as a result of the simulation. This makes it possible to know more easily when the data being transmitted is actually transmitted with certainty. The delivery control portion 105, the transmission rule storage portion 107, and the transmission rule entry portion 108 may be incorporated in the same device or in separate devices to be coupled to each other over a network, and thus not limited to a particular form. Furthermore, the operator terminal portion employs the same device for entry of conditions and output of results, however, separate devices may be employed for the entry of conditions and the output of results, respectively.

In addition, the database portion 103 may be allowed to control the identification information received and stored in all terminals, each of which is then simulated, thereby making it possible to know the situation of each receiving terminal 109. The results obtained by the simulation are further controlled in the database, thereby making it possible to know easily the situation of all receiving terminals.

Incidentally, as partly described above, suppose that a command for delete processing is directly received from a center station or the like via a broadcast system or a communication system (e.g., a telephone, the Internet, or a CATV). In this case, the receiving terminal 109 can be adapted to allow the delete instructing portion to output a delete command in order to perform the delete processing. This would allow the center station to transmit the delete command to the receiving terminal 109 at a given timing to perform the delete processing. However, transmitting the delete command in a broadcasting or the like would not ensure all receiving terminals 109 to receive and execute the delete command with certainty. Thus, the 100% operation of such a function is not assured. Therefore, such an idea is required as the automatic delete processing at the receiving terminal 109 according to the present invention.

[EMBODIMENT 2]

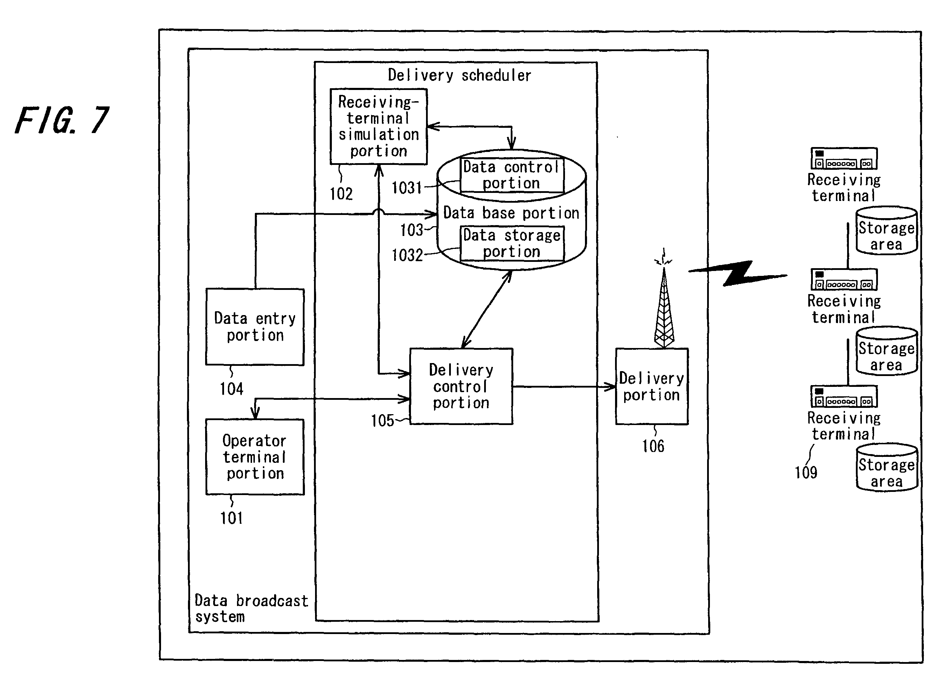

Fig. 7 is a block diagram illustrating the overall configuration of a data broadcast system having a delivery scheduler according to a second embodiment of the present invention. The present invention provides the data broadcast system with the data control portion 1031 for controlling information on transmitted data and on data to be transmitted from now, a data storage portion 1032 for storing the transmitted data, the data to be transmitted from now, and the information on the aforementioned data, the receiving-terminal simulation portion 102 for simulating the operation of receive, storage, and delete processing in accordance with the information at the receiving terminal 109, and the delivery control portion 105 for controlling delivery schedules using the results of the simulation. In addition, the data storage portion 1032, the data control portion 1031, and the receiving-terminal simulation portion 102 may be provided as functional portions in a general purpose computer for executing each function by a program installed in the computer to prepare delivery schedules.

According to each of the aforementioned portions, the database portion 103 stores the data transmitted in the past, and controls what is the expiry date of the data, how long the data exists on the receiving terminal 109, for which region the data is destined, and under what receive conditions the data has been transmitted. (The database portion 103 is composed of the data control portion 1031 and the data storage portion 1032.) Using the data stored in the database portion 103, it is possible to perform a simulation of the state of terminal at the receiving-terminal simulation portion 102 to know the situation of the storage area of the receiving terminal 109. Knowing the situation of the storage area will make it possible to know how much more data can be transmitted and accommodated in the storage area. That is, it is also possible to know when the desired free space is available in the storage area. Using this function, the delivery control portion 105 can know when the data to be delivered from now should be actually delivered to be accommodated in a free space of the receiving terminal 109. It is thus made possible to prepare a delivery schedule of data in consideration of this.

Referring to Fig. 7, the delivery scheduler includes the receiving-terminal simulation portion 102 for performing simulations, the database portion 103 for storing and controlling the information on delivery data, and the delivery control portion 105 for preparing a delivery schedule of which data and when the data should transmitted and for controlling the delivery. The delivery scheduler constitutes a data broadcast system in conjunction with the operator terminal portion 101 for operating the delivery control portion, the data entry portion 104 for registering delivery data, and the delivery, portion 106 for delivering data. The database portion 103 includes the data control portion 1031 and the data storage portion 1032. The following explanations will be given with reference to the data control portion 1031 and the data storage portion 1032 as the database portion 103.

Data that is transmitted from the data broadcast system is received and stored in the receiving terminal 109. It is to be understood that the operator terminal portion 101, the receiving-terminal simulation portion 102, the data control portion 1031, the data storage portion 1032, and the data entry portion 104 may be incorporated into the same device or configured separately and coupled to each other over a network. On the other hand, multiple operator terminal portions 101, database portions 103, and data entry portions 104 may be available.

Now, explained below is how data is controlled in the receiving terminal 109. For one-way data transmission systems, it is impossible to ensure that the data broadcast system provides an instruction for deleting data to execute the instruction. This is because all the receiving terminals 109 would not positively receive and execute the delete instructions or the like that are transmitted in the form of a broadcast. In this context, data to be transmitted is provided with an expiry date and then transmitted. The receiving terminal 109 checks periodically the expiry date of the stored data and then deletes or discards expired data. Accordingly, the data that has expired and become unnecessary is deleted, thereby making it possible to use effectively the storage area of the receiving terminal 109.

In addition, the receiving terminal 109 has stored the information for identifying the region and the type of the receiving terminal 109. The receiving terminal 109 checks the received and stored information, provided to the transmitted data, on the transmission destination and the type of a receiving terminal to allow only corresponding terminals to receive and store the data. In this embodiment, the information on the type of receiving terminals represents how much storage capacity is provided for a terminal. The receiving-terminal type information allows the transmitting side to transmit an amount of data suitable for the storage capacity of the terminal. In addition to the information as to how much storage capacity is provided for the terminal, the receiving-terminal type information can include the information on the configuration of the receiving terminal 109 and on the features of the receiving terminal 109 such as an external connection form.

In addition to the transmission destination information and receiving-terminal type information, the receiving terminal 109 can store, as information for identifying reception and storage, the information such as on the family member or the hobby of the audiences who use the receiving terminal 109. The data to be received and stored may be identified in accordance with the information for identifying reception and storage. Thus, the information used for identification is not limited.

The receiving terminal 109 performs receive and delete processing outside the serviceable period of time of the terminal or during when the terminal is not used by an operator. Here, "outside the serviceable period of time" means when the user does not use the receiving terminal 109, when the user does not look at the display outputted on the receiving terminal 109, or when the receiving terminal 109 itself does not execute automatic processing. In this case, upon deleting expired data, the hard disk area control portion 114 repeats the periods of delete and delete stop operations alternately when the receiving terminal is on, while executing the delete operation successively when the receiving terminal is off. What is referred to by "off" here means that the user turns off the power by means of a remote controller or the like (stand-by state) without turning off the main power. It is to be understood that, when the delete processing could not be performed for some reason, this is carried out when the delete processing has been enabled. When the delete processing coincides in timing with the receive processing, the hard disk area control portion 114 may judge the circumstances each time to perform the delete processing on a priority basis or the write operation on a priority basis. For example, when the delete processing coincides in timing with the receive processing, the delete processing is executed on a priority basis when the storage capacity of the hard disk 113 is nearly used up. That is, the necessary delete processing has been completed when the receive processing is executed. In contrast to this, when the delete processing coincides in timing with the receive processing, the receive processing or write processing is executed on a priority basis when the free space of the hard disk 113 is still sufficiently available.

Upon receiving and storing data, it is also possible that the hard disk area control portion 114 checks the free space of the hard disk 113 to delete expired data when the hard disk 113 is expected to be used up.

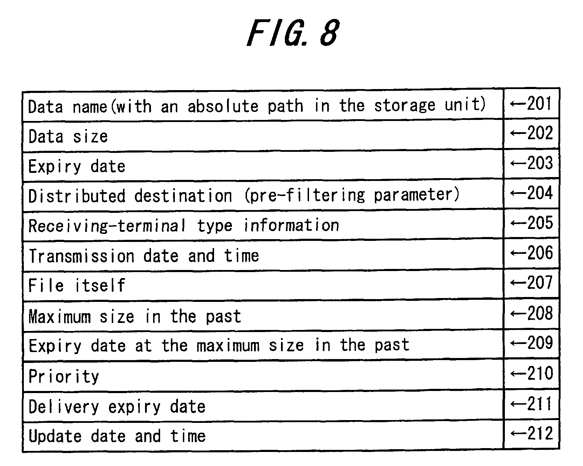

Now, explained below is the flow of the processing from the registration to the transmission of data in the data broadcast system. The data to be transmitted is registered from the data entry portion 104 to the database portion 103. Data may be entered to the data entry portion 104 directly, via a storage medium, or over a network. At the time of the data entry, as shown in Fig. 8, registered are the file name 201, the data size 202, the expiry date 203, the distribution destination 204, the receiving-terminal type 205, the file itself 207, a delivery priority 210, a delivery expiry date 211 that describes by what time data should be transmitted at the latest, and an update date and time 212. Instead of registering the file itself 207, the file can be saved in another location, and the information for linking to the location and the information and identifiers for retrieving the file may be registered.

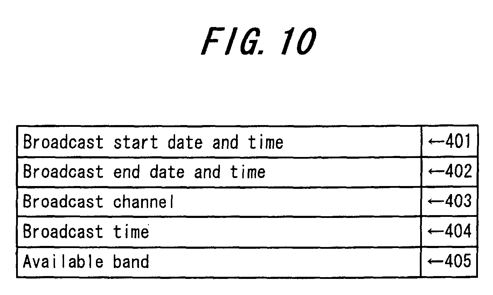

The information of the broadcast frame shown in Fig. 10 is also saved in the database portion 103. The broadcast frame information includes a broadcast start date and time 401, a broadcast end date and time 402, a broadcast channel 403, broadcast time 404, and an available band 405. However, the entry and order of the broadcast frame information are not limited to those described above. The broadcast frame information may be controlled in the same database as controlling data or in an independent database.

Using a schedule preparation scheme described later, the delivery control portion 105 prepares and saves a transmission schedule indicative of when data is transmitted. In accordance with the schedule, the delivery control portion 105 retrieves transmitted data from the database portion 103 to add information on the expiry date 203 and the distribution destination 204 to the transmitted data, which is then outputted to the delivery portion 106. Subsequently, the delivery portion 106 transmits the transmitted data to the receiving terminal 109. This transmission date and time is registered as the transmission date and time 206 in the database portion 103. It may be acceptable to register either a feedback transmission date and time obtained from the delivery portion or register a transmission date and time from the delivery control portion. The transmission may be executed using any communication means such as the ground wave, a satellite, or a wired line, but not limited thereto.

It is also to be understood that the data control entries shown in Fig. 8 are not limited to those described there and may be changed, added, or deleted as appropriate depending on the operation.

However, there is no means available for knowing how the transmitted data is stored, due to the one-way communication. Therefore, the receiving-terminal simulation to be described later is used to take into account the state of the storage (the state of the storage area) of the receiving terminal 109, use of which is made to prepare a data transmission schedule.

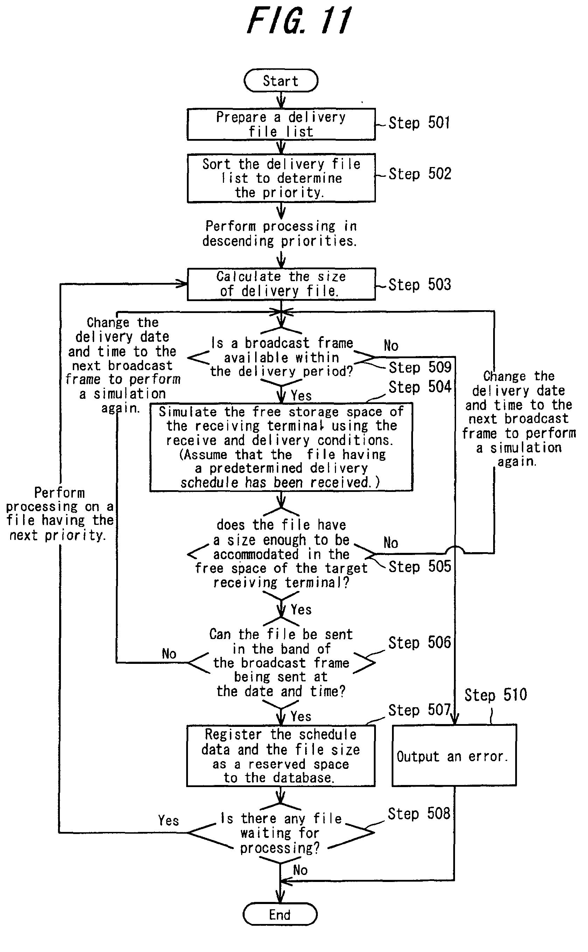

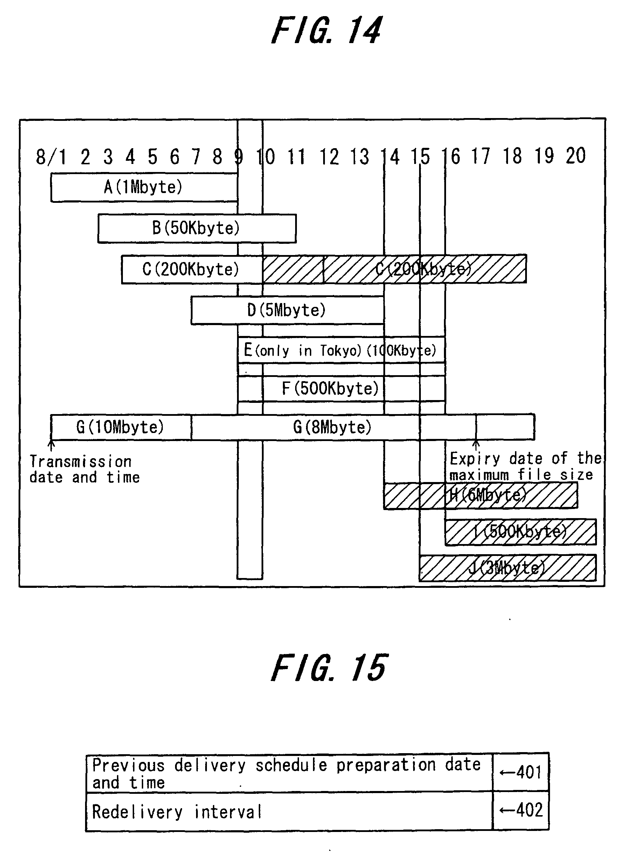

The outline of the preparation of a data delivery schedule is explained with reference to Fig. 11. Fig. 15 is a view illustrating an example of control information saved in the delivery control portion 105 according to this embodiment. First, using a previous delivery schedule preparation date and time 901 and a redelivery interval 902 which are held by the delivery control portion 105 itself, the delivery control portion 105 searches the database portion 103. The delivery control portion 105 thereby retrieves the data that has been updated after the date and time at which the previous delivery schedule was prepared and the data that has experienced a certain period of time after having been delivered previously. Then, the list of the data is stored in a temporary storage area for the time being (step 501). The data that has been once delivered is to be delivered again. This is because it is necessary for a storage broadcast to send data repeatedly so that additional terminals can acquire the data sent in the past, whenever necessary, after a certain period of time.

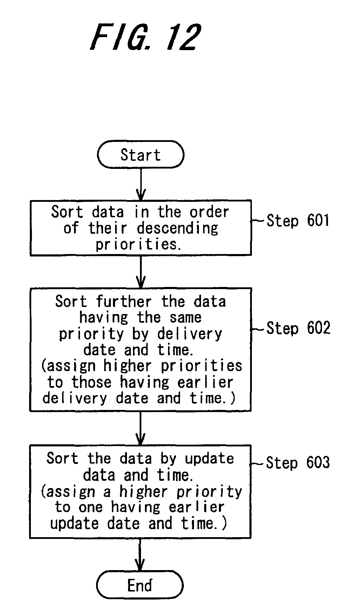

Then, the order (priority) of processing the list stored in the temporary storage area is determined (step 502). The method for determining the order is described with reference to Fig. 12. First, the data is sorted in the order of their descending priorities (step 601). Then, the data having the same priority is sorted by delivery date and time (step 602). This is done as such to send first those that have to be sent earlier. This processing is performed on each priority. Then, the data within the same delivery expiry date is sorted by update date and time (step 603). Priorities are assigned to the data in the order of their ascending update date and time. This is based on the concept that first updated data is delivered on a priority basis.

Such a method (rule) for determining the order of processing is not limited to the aforementioned contents. Various ways of determining the order of processing are conceivable. For example, the order of processing data can be determined according to their data size 201, expiry date 203, data name (accommodated in a particular directory), distribution destination 204, receiving-terminal type 205, delivery expiry date 211, or update date and time 212. These are determined in the course of operation.

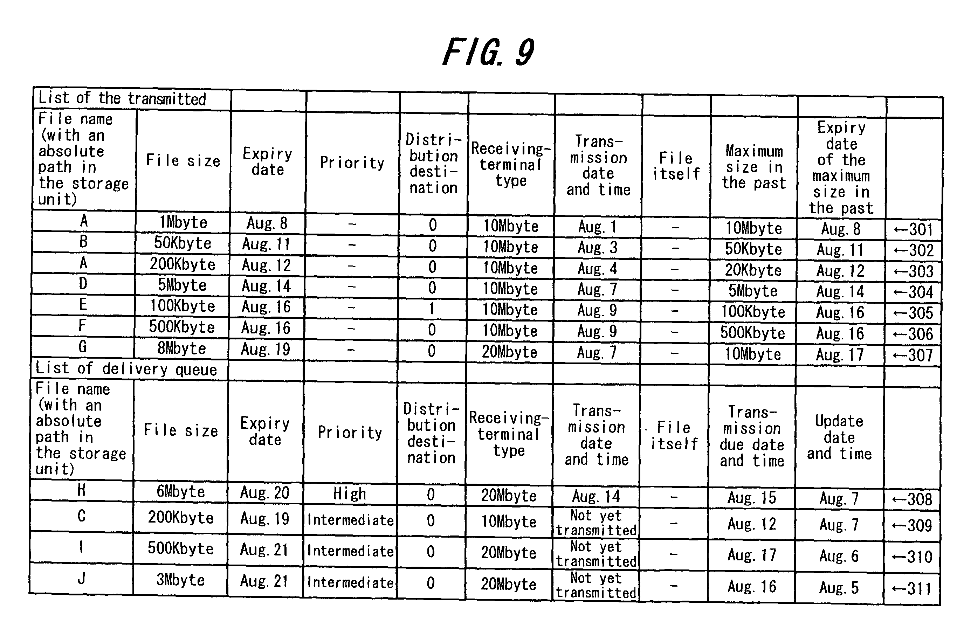

In accordance with the order of processing determined through this step, the delivery schedule is prepared. In accordance with the order of processing determined by the aforementioned method, the data in the delivery queue list of Fig. 9 is processed in the order of H, C, J, and I.

Then, the size of data is calculated (step 503). The size of data is that of a file itself when the data is defined as the single file. On the other hand, when the unit of a delivery is defined as the data included in a directory or any other given unit, the size of data is the total of the data included in the directory or the given unit. Data will be treated as a batch to prepare a delivery schedule below; however, it is also acceptable to make a schedule with data defined in a file, directory, or a given unit, which are actual control units.

Now, using the receive conditions and delivery date and time of data, a simulation is performed on the free space of the receiving terminal 109 (step 504). It is assumed that the delivery date and time is saved as the information of a broadcast frame in the database portion 103 in time sequence. The aforementioned saved broadcast frames having an earlier date and time are adopted in sequence as the conditions for the simulation of the free space. (Any request for broadcasting other data in this broadcast frame period would be met in some other way.) This is done as such because a frame for broadcasting data is often predetermined under contract. When the date and time for broadcasting data can be determined freely, the delivery date and time is determined in consideration of the expiry date of the data, the timing for deleting the data, and so forth.

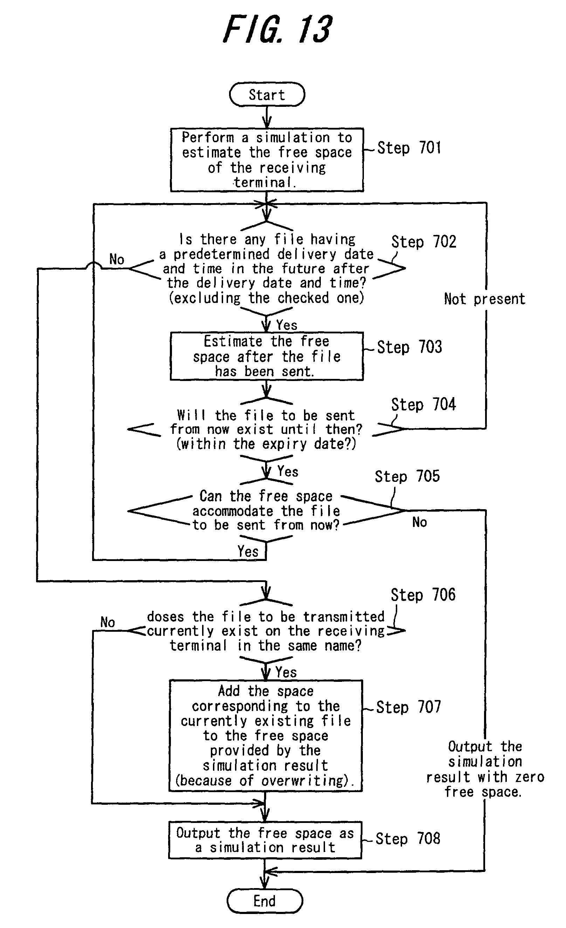

Fig. 13 is an explanatory flow diagram illustrating a free space simulation operation according to this embodiment. In this free space simulation operation, at least one or more of the following parameters are specified from the delivery control portion 105 to the receiving-terminal simulation portion 102 (steps 701 to 707). The parameters include the delivery date and time of the data, the receive conditions (such as the region or receiving-terminal type) that the data has, the minimum data write unit of the receiving terminal 109, and so forth.

Now, described below is the method for performing a simulation when the date and time, the region, and the receiving-terminal type are specified in step 701.

1. A search is made on all the transmitted data from the transmission date and time 206 to the expiry date 203 for the occurrence of the delivery date and time specified. These search results are taken as search results 1.

2. A search is further performed on the search results 1 for the data to be received in the specified region. These search results are taken as search results 2.

3. A search is further performed on the search results 2 for the data to be received by the specified receiving-terminal type. These search results are taken as search results 3.

4. If a plurality of conditions exist for the simulation, a search is repeated on the previous search results for a current condition (in this case, no further conditions exist).

5. The data obtained from the final search results (search results 3 in this case) will be present in the storage area of the receiving terminal 109 when received at the specified date and time by the terminal having the specified region and type, and delete processing has been performed properly.

6. The sum of the data is the amount of use of the storage capacity.

Suppose that the data having the information shown in Fig. 9 has been transmitted. Described below is the actual free space simulation for this case. Fig. 14 illustrates the period of time during which the data is stored in the storage area of the receiving terminal 109.

In the free space simulation operation of Fig. 13, the delivery date and time of files in a delivery queue is determined in the following steps in the order of their descending priorities. In this embodiment, explanations are given assuming that the broadcast frame is assigned once a day at a fixed time (e.g., at 00:00 AM), and the expiry date of data is simply defined in days. However, in practice, data are delivered in a plurality of broadcast frames a day. It is also possible to control the expiry date of the data in smaller units. Assuming that the first broadcast frame can be delivered in a broadcast on August 9, it is verified whether data H can be delivered on the day. First, the state of the receiving terminal 109 is simulated to estimate the free space of the storage area (step 701). Suppose that the conditions for simulation require a date of August 9, a terminal having no region specified, a receiving-terminal type having a storage capacity of 20 Mbytes, and a least write unit of 128 kbytes. (Since Tokyo is specified as 1 and no destination as 0 in the distribution destination of data information, file H could be received at all regions.) (It is assumed that a receiving terminal 109 having a storage capacity of 20 Mbytes also receives and stores data destined for the receiving terminals 109 having a capacity less than that.)

As can be seen from Fig. 14, the data present on August 9 are B, C, D, E, F, and G (search results 1). A simulation of terminals located at all regions provides B, C, D, E, F, and G (search results 2). The data to be received by a terminal having a receiving-terminal type of 20 Mbytes are B, C, D, E, and F (search results 3). The amount of use of storage area can be calculated from the sizes of the data B, C, D, F, and G. The size of the data itself is 50 kbytes for B, 200 kbytes for C, 5 Mbytes (5120 kbytes) for D, 100 kbytes for E, 500 kbytes for F, and 8 Mbytes for G.

However, the transmitted data G has the maximum size of 10 Mbytes in the past and an expiry date of August 17. That is, the receiving terminal 109 that has failed to receive the data G of a size of 8 Mbytes will have the data G of a size of 10 Mbytes present until August 17. To allow such a receiving terminal 109 to receive data properly, the calculation is performed assuming that the size of data G is 10 Mbytes although the data G has a size of 8 Mbytes in fact.

Accordingly, the total of the data is 50 kbytes for B + 200 kbytes for C + 5 Mbytes (5120 kbytes) for D + 100 kbytes for E + 500 kbytes for F + 10 Mbytes for G = 16210 kbytes. Therefore, the free space for the receiving terminal 109 having a storage capacity of 20 Mbytes is 20 Mbytes (20480 kbytes) - 16210 kbytes = 4270 kbytes.

Then, a searching is made for the presence of data that has already been determined to be delivered (step 702). The searched results are saved in the storage area for the time being to make the following checks on each of the searched results. Here, data has not been delivered at the simulated date and time but planned to be delivered in the future. When the schedule has been determined, the presence of the (simulated) data to be distributed from now is not taken into account. Accordingly, the free space has to be taken into account so that the data having a predetermined delivery date and time can be properly received. When the data having a predetermined delivery date and time is present, it is checked whether the data to be distributed from now is present at the delivery date and time of the data having a predetermined delivery date and time (step 704). If the data is present, a free space of the receiving terminal 109 available then is calculated to check whether the data to be distributed from now can be accommodated in the free space (step 705). If the data cannot be accommodated, the receiving-terminal simulation portion 102 outputs to the delivery control portion 105 the result that there is no free space available. This is done as such because even if data can be sent until the simulated delivery date and time, there is a problem with the predetermined delivery of the data. If the data can be accommodated, the same check is made successively on other data, having the predetermined delivery date and time and stored in the storage area, to assure that any problem will not occur at any scheduled delivery date and time (steps 702, 703, 704, and 705 are repeated). At this stage of still preparing a first schedule, there is no change in free space since no data which is scheduled to be delivered in the future is present.

It is then checked whether the data to be delivered already exists in the receiving terminal 109 (step 706). If the data exists, since the data will be overwritten, it is not necessary to include the existing data in the calculation of free space (the overwriting will cause the existing data to be erased once). Therefore, since the presence of the same data would cause a free space to increase by the size of the existing data, added is the size of the data having the name of the same meaning as that of the data that is already present in the free space of the receiving terminal 109 and sent from now (step 707). There is no change in free space since data H is sent for the first time. As a result of the simulation, the receiving-terminal simulation portion 102 outputs, to the delivery control portion 105, the free space added by an overlap as the final free space (step 708).

It is then checked whether the size of the data desired to be sent is suitable for being accommodated in the free space (step 505). Since data H has a size of 6 Mbytes (6144 kbytes) and a free space of only 4270 kbytes is available in the receiving terminal 109 at the expected stage of August 9, it is impossible to store the data. Even when other data can be sent at the present stage, no delivery schedule is assigned thereto in order to find the date and time at which data of the highest priority can be sent first. Since the data cannot be sent at the stage of August 9, the delivery date and time is changed to the subsequent deliverable broadcast frame on August 10 to perform a simulation.

The currently lacking area is 6144 - 4270 = 1874 kbytes. As can be seen from Fig. 14, there is no chance of an increase in free space by 1874 kbytes on August 10, 11, 12, and 13. A sufficient capacity will not be available in the receiving terminal 109 until the expiry date of data D (of 5 Mbytes) ends on August 14. As described above, the information on the broadcast frame stored in the database portion 103 is successively retrieved and the resulting delivery date and time is adopted to perform simulations repeatedly. It can be thereby found that the data can be delivered on August 15 (steps 504 and 505 are repeated). In this case, although the broadcast frame is set once a day for simplicity, more frequent broadcast frames are conceivably set in practice.

Suppose that successive searches have not provided any deliverable broadcast frames or a broadcast frame has not been sent by its delivery expiry date. In this case, an error is outputted to interrupt the processing (step 509). Since this happens because of too large a size of the data to be delivered, the size of the delivery data itself is changed and then a delivery schedule is prepared again. Then, it is checked whether data can be sent in the broadcast frame derived from steps 504 and 505 (step 506).

In'this embodiment, since the broadcast frame is set once a day for simplicity as described above, a constant amount of data can be sent in a broadcast frame. However, when more broadcast frames are set in a day, there is a possibility that the period of time of a single frame becomes variant or available bands may increase or decrease. In other words, the deliverable amount of data is varied depending on the broadcast frame. The size of data that can be actually sent in a broadcast frame can be determined by the repetition of the period of time $\times$ band / delivery of the broadcast frame. Therefore, a broadcast frame may often be insufficient even when the receiving terminal 109 is ready to receive data. In such a case, the broadcast frame is successively shifted towards the future to find a broadcast frame sufficiently enough to send data and allow the receiving terminal 109 to receive the data (steps 504, 505, and 506 are repeated). In general, when the time axis is shifted towards the future, the storage capacity of the receiving terminal 109 will decrease. It is thus possible to find a deliverable broadcast frame in practice (step 506 is repeated). Suppose that successive searches have not provided any deliverable broadcast frames or a broadcast frame has not been sent by its delivery expiry date. In this case, an error is outputted to interrupt the processing (step 509). Since this happens because of too large a size of the data to be delivered, directories are divided when the data is sent in the directory or the size of a file is changed when the data is sent in the file. Thus, the data itself is changed to prepare a delivery schedule again.

As such, it is made possible to obtain the delivery date and time (the date and time of a broadcast frame) at which the receiving terminal 109 can receive and store data and can send data sufficiently in the broadcast frame. This result is registered to the transmission date and time 206 in the database portion 103 (step 507).

Then, it is checked whether data is in a delivery queue. If true, the processing is performed on data having the next priority (step 508). In this case, the processing is performed on data C which has a higher priority next to data H. Like the case of file H, assuming that a first broadcast frame can be broadcast on August 9 to check if data C can be delivered on the day.

First, the state of the receiving terminal 109 is simulated to estimate the free space of the storage area (step 701). Since the simulation result is the same as in the case of data H, the free space is 4270 kbytes.

However, since the delivery date and time of data H has been determined, it is checked whether having sent data C would raise any problem when data H is delivered. To this end, the free space is estimated which will be available when data H is sent (step 703). The free space available then is 20 Mbytes - E(100 kbytes) - F(500 kbytes) - G(10 Mbytes) - H(6 Mbytes) = about 3.5 Mbytes.

Then, the expiry date is checked to know whether data C to be sent from now exists until the date and time at which data H is sent (step 704). Since data H has a delivery date and time of August 14 (308) and data C has an expiry date of August 19 (309), it can be found that data C is present at the date and time at which data H is sent. It can also be found that data C can be sent without any problem since data C has a size of 200 kbytes and the free space available after data H has been sent is about 3.5 Mbytes. Since there is no other data that is to be delivered, the process proceeds to the next step.

Now, it is checked whether the data to be delivered next is already present in the receiving terminal 109 (step 706). Since data C is data that has been sent, the free space of the receiving terminal 109 should be subtracted by the capacity of data C that is already present therein. In other words, although there is a free space of 4270 kbytes, a size of 200 kbytes of data C that is already present in the receiving terminal 109 is also an available area in practice.

As a result of the simulation, a final free space obtained by adding the overlap to the free space is outputted from the receiving-terminal simulation portion 102 to the delivery control portion 105 (step 708). Then, in the same procedure as for data H, it is checked if data can be delivered. If true, the date and time of the simulation (the delivery frame) is registered as a schedule (step 507).

For data J, the data itself has a size of 3 Mbytes and is subjected to the same processing as the foregoing processing (steps 503 to 505). This tells that data J even when sent in the broadcast frame of data H could be received by and stored in the receiving terminal 109 with no problem (the free space available after data H has been sent is 3.5 Mbytes). It is then checked whether the data can be sent using the same broadcast frame as that of data H and a sufficient band is available (step 506). This is because there is a limit to the amount of data that can be sent in a broadcast frame. For example, suppose that the broadcast frame for sending data H has a deliverable total amount of data of 8 Mbytes. In this case, data J cannot be sent (since the total size of data H and J is 9 Mbytes). Therefore, in order to send data J, it is necessary to find a new deliverable broadcast frame. In other words, it is necessary to simulate deliverable broadcast frames successively (steps 504, 505, and 506 are repeated).

On the other hand, suppose that a plurality of deliverable broadcast frames are present at the same time (i.e., a plurality of transmission paths). In this case, it is also conceivable to use broadcast frames having a broader transmission band on a priority basis. That is, when delivery data having a higher priority is desired to be delivered as soon as possible, a transmission path having a broader transmission band can be selected to thereby make it possible to send the data as soon as possible.

As is obvious from the embodiments described above, the present invention provides a system for transmitting data using a one-way communication. The system includes a data control portion for controlling the information on transmitted data and data to be transmitted from now, a data storage portion for storing the transmitted data, the data to be transmitted from now, and information on the data, and a receiving-terminal simulation portion for simulating the operation of receive, storage, and delete processing at the receiving terminal in accordance with the information. This makes it possible to know the situation of the storage area of the receiving terminal and make and implement an efficient transmission plan.

In particular, this makes it possible to simulate what expiry date the transmitted data has, until when the data will exist on the receiving terminal, and to which region the data has been transmitted, thereby making it possible to know the situation of the storage area of the receiving terminal. Knowing the situation of the storage area will make it possible to know how much more data can be transmitted and accommodated in the storage area. It is also made possible to know when the desired free space is available in the storage area.

According to another aspect of the present invention, the system for transmitting data using one-way communication is provided with a delivery scheduler including a data storage portion for storing information on data, a data control portion for controlling data, a receiving-terminal simulation portion for simulating the state of a receiving terminal, and a delivery control portion for preparing a delivery schedule of data using a simulation result. This makes it possible to make and implement a transmission plan (a delivery schedule) by which the receiving terminal can positively receive and deliver data.

## Claims

1. A receiving-terminal simulator for use in a system for transmitting data using one-way communication, the simulator being **characterized by** comprising:

   a data storage portion for storing information on data;
   a data control portion for controlling data; and
   a receiving-terminal simulation portion for simulating a state of a receiving terminal.

2. The receiving-terminal simulator according to claim 1, **characterized in that**
   said simulation is performed on a storage area of the receiving terminal.

3. The receiving-terminal simulator according to claim 1, **characterized in that**
   date and time is specified to simulate the state of the receiving terminal.

4. The receiving-terminal simulator according to claim 1, **characterized in that**
   information for identifying data received by and stored in the receiving terminal is specified as a simulation condition to simulate the state of the receiving terminal.

5. The receiving-terminal simulator according to claim 1, **characterized in that**
   a type of the receiving terminal is specified as a simulation condition to simulate the state of the receiving terminal.

6. The receiving-terminal simulator according to claim 1, **characterized in that**
   an installed location of the receiving terminal is specified as a simulation condition to simulate the state of the receiving terminal.

7. The receiving-terminal simulator according to claim 1, **characterized in that**
   date and time of data delete processing performed at the receiving terminal is specified to simulate the state of the receiving terminal.

8. The.receiving-terminal simulator according to claim 1, **characterized in that**
   a period of time for data delete processing not to be performed at the receiving terminal is specified to simulate the state of the receiving terminal.

9. The receiving-terminal simulator according to claim 1, wherein
   at a receiving terminal for performing delete processing on received data at predetermined time intervals, an expiry date of data is replaced with an expiry date added by a period from the end of the expiry date of said data to the subsequent data delete processing to simulate the state of said receiving terminal

10. The receiving-terminal simulator according to claim 1, **characterized in that**
    a minimum size of data to be written to a storage area of the receiving terminal is specified to simulate the state of the receiving terminal.

11. The receiving-terminal simulator according to claim 2, **characterized in that**
    a simulation of the storage area of the receiving terminal can be performed in units of one or more directories.

12. The receiving-terminal simulator according to claim 2, **characterized in that**
    a simulation of the storage area of the receiving terminal can be performed in units of one or more media.

13. The receiving-terminal simulator according to claim 2, **characterized in that**
    a simulation of the storage area of the receiving terminal can be performed in units of one or more file types.

14. A data transmission system comprising a delivery control portion for estimating a possible date and time of transmission of specified data using a simulation result provided by the receiving-terminal simulator according to claim 1.

15. The data transmission system according to claim 14, **characterized by** further comprising a transmission rule storage portion for holding an algorism to make a transmission plan at the transmission control portion.

16. The data transmission system according to claim 15, **characterized by** further comprising a transmission rule entry portion for entering said algorism.

17. A receiving-terminal simulation program, used to simulate a receive capacity of a receiving terminal for receiving data using a one-way communication, for allowing a general purpose computer to function as a data storage portion for storing information on data, a data control portion for controlling data, and a receiving-terminal simulation portion for simulating the state of the receiving terminal.

18. A delivery scheduler for use in a system for transmitting data using one-way communication, comprising:

a data storage portion for storing information on data;

a data control portion for controlling data;

a receiving-terminal simulation portion for simulating a state of a receiving terminal; and

a delivery control portion for preparing a delivery schedule of data using a simulation result.

19. The delivery scheduler according to claim 18, **characterized in that**

upon preparing delivery schedule, an order of processing delivery data is determined by a combination of any one or more of a priority, delivery date and time, expiry date, data size, distribution destination, information on a receiving-terminal type, update date and time, and data name of the delivery data, and

a schedule is prepared in accordance with said order of processing.

20. The delivery scheduler according to claim 18, **characterized in that**

upon preparing delivery schedule, a delivery date and time is assumed,

a simulation is performed on the receiving terminal of said delivery date and time, and

a delivery schedule is prepared after it has been confirmed that the receiving terminal can receive and store data on said date and time.

21. The delivery scheduler according to claim 18, **characterized in that**

upon preparing delivery schedule, a delivery date and time is assumed,

a simulation is performed on the receiving terminal of said delivery date and time,

when such a simulation result is obtained that the receiving terminal cannot receive and store data at the date and time of the condition of the simulation, said delivery date and time is changed within a predetermined period of time to repeat a simulation in order to prepare a delivery schedule allowing the receiving terminal to receive and store data.

22. The delivery scheduler according to claim 21, **characterized in that**

upon changing said delivery date and time, said delivery date and time is shifted to the future to repeat a simulation.

23. The delivery scheduler according to claim 21, **characterized in that**

when no possible date and time of allowing the receiving terminal to receive and store data by a delivery date and time even after said delivery date and time has been changed exists and thus no delivery of data is possible, an error is outputted.

24. The delivery scheduler according to claim 18, **characterized in that**

upon preparing a delivery schedule, when data to be delivered will be already pre.sent in the future after a date and time of an expected delivery, a delivery schedule is prepared after it has been confirmed that a free space will be available at the receiving terminal, the free space sufficiently enough to accommodate data to be delivered in the future even after said data taken into account for determining the delivery schedule is sent.

25. The delivery scheduler according to claim 18, **characterized in that**

upon preparing a delivery schedule, a check is made for data to be overwritten in the same name,

when data to be overwritten is found, a free space of the receiving terminal is simulated in consideration of a volume of an overlapping file, and

a delivery schedule is prepared using a result of the simulation.

26. The delivery scheduler according to claim 18, **characterized in that**

upon preparing a delivery schedule, it is simulated if a transmission frame of data can be sent in the band of a transmission path at a specified delivery date and time, and

if it is not true, the delivery date and time is changed within a predetermined period of time and a simulation is repeated to prepare a deliverable delivery schedule.

27. The delivery scheduler according to claim 26, **characterized in that**

said delivery date and time is shifted towards the future and thereby changed to prepare a deliverable delivery schedule.

28. The delivery scheduler according to claim 26, **characterized in that**

when even after said delivery date and time has been changed, no possible date and time of transmission exists in a transmission path band and no delivery is possible, an error is outputted.

29. The delivery scheduler according to claim 18, **characterized in that**

when a plurality of transmission paths available for delivery are present and each transmission path has a different transmission band, a delivery schedule is prepared so as to deliver delivery data having a higher delivery priority using a broader transmission path.

30. A delivery schedule preparing program, used to prepare a delivery schedule in a system for transmitting data using a one-way communication, for allowing a general purpose computer to function as

a data storage portion for storing information on data,

a data control portion for controlling data,

a receiving-terminal simulation portion for simulating a state of the receiving terminal, and

a delivery control portion for preparing a data delivery schedule using a simulation result.

31. A receiving terminal comprising

a receiving portion for receiving data from a data transmission system,

a data storage and update portion for storing, updating, or deleting the received data,

a storage area for storing data therein,

a storage area control portion for controlling an operation of writing or deleting data on the storage area, and

a clock portion for providing clock information used for said storage area control portion to determine whether an expiry date of data stored in the storage area and having the expiry date has ended.

32. The receiving terminal according to claim 31, further comprising

a contents attribute control portion for controlling a situation of reference to data stored in the storage area.

33. The receiving terminal according to claim 32, further comprising

region information storing means for storing region information to identify a region of a receiving-terminal location.

34. The receiving terminal according to claim 32, further comprising

type information storing means for storing type information indicative of a type of a receiving terminal.

35. The receiving terminal according to claim 31, **characterized in that**

said storage area control portion checks periodically an expiry date of data stored in the storage area and deletes or discards expired data in accordance with clock information provided from the clock portion.

36. The receiving terminal according to claim 33, **characterized in that**

said storage area control portion checks transmission destination information provided to transmitted data in accordance with data from the region information storing means to receive and store corresponding data.

37. The receiving terminal according to claim 34, **char-**

**acterized in that**

said storage area control portion checks receiving-terminal type information provided to transmitted data in accordance with data from the type information storing means to receive and store corresponding data.

38. The receiving terminal according to claim 35, **characterized in that**

said storage area control portion checks a free space of the storage area and allows expired storage data to stay therein when a free space is sufficiently available.

39. The receiving terminal according to claim 38, **characterized in that**

said storage area control portion checks a free space of the storage area and deletes expired data when the storage area has been filled up or is likely to be filled up.

40. The receiving terminal according to claim 38, **characterized in that**

upon receiving and storing data, said storage area control portion checks a free space of the storage area and deletes expired data when the storage area is to be filled up.

41. The receiving terminal according to claim 35, 39, or 40, **characterized in that**

upon deleting expired data, said storage area control portion excludes data being referenced from being deleted or discarded, in accordance with data from the contents attribute control portion.

42. The receiving terminal according to claim 35, 39, or 40, **characterized in that**

upon deleting expired data, said storage area control portion excludes data being referenced from being deleted or discarded, in accordance with data from the contents attribute control portion, and

when the data is not referenced any more, said storage area control portion deletes said data as expired data from the storage area.

43. The receiving terminal according to claim 35, 39, or 40, **characterized in that**

upon deleting expired data, said storage area control portion performs delete processing outside a serviceable period of time of the terminal.

44. The receiving terminal according to claim 35, 39, or 40, **characterized in that**

upon deleting expired data, said storage area control portion repeats alternately delete operation period and delete stop period when the receiving terminal is on, whereas executing a delete operation successively when the receiving terminal is off.

**45.** The receiving terminal according to claim 31, **characterized by** further comprising
a delete instruction portion for instructing to delete expired data from the storage area.

**46.** A data reception and transmission system, comprising:

a data transmission system having

a data storage portion for storing data,
a data control portion for controlling data, and
a receiving-terminal simulation portion for simulating a state of a receiving terminal, wherein
transmitted data is provided with an expiry date of the data and transmitted; and

a data reception system having

a portion for receiving data from the data transmission system,
a data storage and update portion for storing received data,
a storage area for storing data therein,
a storage area control portion for controlling an operation of writing or deleting data on the storage area, and
a clock portion for providing clock information used for said storage area control portion to determine whether an expiry date of data stored in the storage area and having the expiry date has ended, wherein
received data is deleted at predetermined time intervals.

FIG. 1

Receiving-terminal simulator

Operator terminal portion (enter condition /output results)
101

Receiving-terminal simulation portion
102

Data control portion
1031

Data base portion
103

Data storage portion
1032

Data entry portion
104

Delivery control portion
105

Delivery portion
106

Transmission rule storage portion
107

Transmission rule entry portion
108

Data broadcast system

Receiving terminal

Storage area

Receiving terminal

Storage area

Receiving terminal
109

Storage area

EP 1 235 371 A1

# FIG. 2

- 120 — Region/type information storage portion
- 118 — Delete instruction portion
- 111 — Tuner
- 121 — Operator entry portion
- 119 — Clock portion
- 114 — Hard disk area control portion
- 112 — Storage update portion
- 116 — Display portion
- 115 — Viewer
- 117 — Contents attribute control portion
- 113 — Hard disk

# FIG. 3

| File name(with an absolute path in the storage unit) | ←201 |
|---|---|
| File size | ←202 |
| Expiry date | ←203 |
| Distributed destination (pre-filtering parameter) | ←204 |
| Receiving-terminal type | ←205 |
| Transmission date and time | ←206 |
| File itself | ←207 |

# FIG. 4

| | |
|---|---|
| File name(with an absolute path in the storage unit) | A |
| File size | 1Mbytes |
| Expiry date | Aug. 8 |
| Distributed destination (pre-filtering parameter) | 0 |
| Receiving-terminal type | 10Mbytes |
| Transmission date and time | Aug. 1 |
| File itself | – |
| File name(with an absolute path in the storage unit) | B |
| File size | 50Kbytes |
| Expiry date | Aug. 11 |
| Distributed destination (pre-filtering parameter) | 0 |
| Receiving-terminal type | 10Mbytes |
| Transmission date and time | Aug. 3 |
| File itself | – |
| File name(with an absolute path in the storage unit) | C |
| File size | 200Kbytes |
| Expiry date | Aug. 12 |
| Distributed destination (pre-filtering parameter) | 0 |
| Receiving-terminal type | 10Mbytes |
| Transmission date and time | Aug. 4 |
| File itself | – |
| File name(with an absolute path in the storage unit) | D |
| File size | 5Mbytes |
| Expiry date | Aug. 14 |
| Distributed destination (pre-filtering parameter) | 0 |
| Receiving-terminal type | 10Mbytes |
| Transmission date and time | Aug. 7 |
| File itself | – |
| File name(with an absolute path in the storage unit) | E |
| File size | 100Kbytes |
| Expiry date | Aug. 6 |
| Distributed destination (pre-filtering parameter) | 0 |
| Receiving-terminal type | 10Mbytes |
| Transmission date and time | Aug. 9 |
| File itself | – |
| File name(with an absolute path in the storage unit) | F |
| File size | 500Kbytes |
| Expiry date | Aug. 16 |
| Distributed destination (pre-filtering parameter) | 0 |
| Receiving-terminal type | 10Mbytes |
| Transmission date and time | Aug. 9 |
| File itself | – |
| File name(with an absolute path in the storage unit) | g |
| File size | 10Mbytes |
| Expiry date | Aug. 17 |
| Distributed destination (pre-filtering parameter) | 0 |
| Receiving-terminal type | 20Mbytes |
| Transmission date and time | Aug: 6 |
| File itself | – |

20

## FIG. 5

## FIG. 6

FIG. 7

EP 1 235 371 A1

# FIG. 8

| | |
|---|---|
| Data name (with an absolute path in the storage unit) | ←201 |
| Data size | ←202 |
| Expiry date | ←203 |
| Distributed destination (pre-filtering parameter) | ←204 |
| Receiving-terminal type information | ←205 |
| Transmission date and time | ←206 |
| File itself | ←207 |
| Maximum size in the past | ←208 |
| Expiry date at the maximum size in the past | ←209 |
| Priority | ←210 |
| Delivery expiry date | ←211 |
| Update date and time | ←212 |

# FIG. 9

| List of the transmitted | | | | | | | | | | |
|---|---|---|---|---|---|---|---|---|---|---|
| File name (with an absolute path in the storage unit) | File size | Expiry date | Priority | Distribution destination | Receiving-terminal type | Transmission date and time | File itself | Maximum size in the past | Expiry date of the maximum size in the past | |
| A | 1Mbyte | Aug. 8 | – | 0 | 10Mbyte | Aug. 1 | – | 10Mbyte | Aug. 8 | ←301 |
| B | 50Kbyte | Aug. 11 | – | 0 | 10Mbyte | Aug. 3 | – | 50Kbyte | Aug. 11 | ←302 |
| A | 200Kbyte | Aug. 12 | – | 0 | 10Mbyte | Aug. 4 | – | 20Kbyte | Aug. 12 | ←303 |
| D | 5Mbyte | Aug. 14 | – | 0 | 10Mbyte | Aug. 7 | – | 5Mbyte | Aug. 14 | ←304 |
| E | 100Kbyte | Aug. 16 | – | 1 | 10Mbyte | Aug. 9 | – | 100Kbyte | Aug. 16 | ←305 |
| F | 500Kbyte | Aug. 16 | – | 0 | 10Mbyte | Aug. 9 | – | 500Kbyte | Aug. 16 | ←306 |
| G | 8Mbyte | Aug. 19 | – | 0 | 20Mbyte | Aug. 7 | – | 10Mbyte | Aug. 17 | ←307 |
| List of delivery queue | | | | | | | | | | |
| File name (with an absolute path in the storage unit) | File size | Expiry date | Priority | Distribution destination | Receiving-terminal type | Transmission date and time | File itself | Transmission due date and time | Update date and time | |
| H | 6Mbyte | Aug. 20 | High | 0 | 20Mbyte | Aug. 14 | – | Aug. 15 | Aug. 7 | ←308 |
| C | 200Kbyte | Aug. 19 | Intermediate | 0 | 10Mbyte | Not yet transmitted | – | Aug. 12 | Aug. 7 | ←309 |
| I | 500Kbyte | Aug. 21 | Intermediate | 0 | 20Mbyte | Not yet transmitted | – | Aug. 17 | Aug. 6 | ←310 |
| J | 3Mbyte | Aug. 21 | Intermediate | 0 | 20Mbyte | Not yet transmitted | – | Aug. 16 | Aug. 5 | ←311 |

## FIG. 10

| | |
|---|---|
| Broadcast start date and time | ←401 |
| Broadcast end date and time | ←402 |
| Broadcast channel | ←403 |
| Broadcast time | ←404 |
| Available band | ←405 |

## FIG. 11

Start

Prepare a delivery file list — Step 501

Sort the delivery file list to determine the priority. — Step 502

Perform processing in descending priorities.

Calculate the size of delivery file. — Step 503

Change the delivery date and time to the next broadcast frame to perform a simulation again.

Is a broadcast frame available within the delivery period? — Step 509 — No

Step 504

Yes

Simulate the free storage space of the receiving terminal using the receive and delivery conditions. (Assume that the file having a predetermined delivery schedule has been received.)

Change the delivery date and time to the next broadcast frame to perform a simulation again.

Perform processing on a file having the next priority.

does the file have a size enough to be accommodated in the free space of the target receiving terminal? — Step 505 — No

Yes

Can the file be sent in the band of the broadcast frame being sent at the date and time? — Step 506 — No

Yes

Register the schedule data and the file size as a reserved space to the database. — Step 507

Step 510

Output an error.

Is there any file waiting for processing? — Step 508 — Yes

No

End

# *FIG. 12*

```
        ┌──────────┐
        │  Start   │
        └────┬─────┘
             ↓
  ┌──────────────────────┐
  │ Sort data in the order│  ──Step 601
  │   of their descending │
  │      priorities.      │
  └──────────┬───────────┘
             ↓
  ┌──────────────────────┐
  │  Sort further the data│
  │     having the same   │
  │  priority by delivery │  ──Step 602
  │     date and time.    │
  │ (assign higher priorities│
  │ to those having earlier│
  │ delivery date and time.)│
  └──────────┬───────────┘
             ↓
  ┌──────────────────────┐
  │ Sort the data by update│  ──Step 603
  │     data and time.    │
  │ (assign a higher priority│
  │  to one having earlier │
  │  update date and time.)│
  └──────────┬───────────┘
             ↓
        ┌──────────┐
        │   End    │
        └──────────┘
```

## FIG. 13

Start

Perform a simulation to estimate the free space of the receiving terminal. — Step 701

Is there any file having a predetermined delivery date and time in the future after the delivery date and time? (excluding the checked one) — Step 702

No → Not present

Yes

Estimate the free space after the file has been sent. — Step 703

Will the file to be sent from now exist until then? (within the expiry date?) — Step 704

Yes

Can the free space accommodate the file to be sent from now? — Step 705 — No

Yes

doses the file to be transmitted currently exist on the receiving terminal in the same name? — Step 706

No

Yes

Add the space corresponding to the currently existing file to the free space provided by the simulation result (because of overwriting). — Step 707

Output the simulation result with zero free space.

Output the free space as a simulation result — Step 708

End

## FIG. 14

## FIG. 15

| Previous delivery schedule preparation date and time | ←401 |
|---|---|
| Redelivery interval | ←402 |

<table>
<tr><td colspan="2" align="center">**INTERNATIONAL SEARCH REPORT**</td><td colspan="2">International application No.<br>PCT/JP01/07358</td></tr>
</table>

**A. CLASSIFICATION OF SUBJECT MATTER**
Int.Cl$^7$   H04H7/00, H04H1/00, G06F13/00

According to International Patent Classification (IPC) or to both national classification and IPC

**B. FIELDS SEARCHED**

Minimum documentation searched (classification system followed by classification symbols)
Int.Cl$^7$   H04H7/00, H04H1/00, G06F13/00

Documentation searched other than minimum documentation to the extent that such documents are included in the fields searched
Jitsuyo Shinan Koho           1922-1996     Toroku Jitsuyo Shinan Koho  1994-2001
Kokai Jitsuyo Shinan Koho  1971-2001     Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-305670 A (NEC Corporation),<br>28 November, 1997 (28.11.97), | 1-3,6-30,46 |
| Y | abstract; Par. Nos. 20, 26, 31, 39, 52;<br>Figs. 6, 7   (Family: none) | 4,5 |
| X | JP 10-32796 A (Kabushiki Kaisha Infocity),<br>03 February, 1998 (03.02.98),<br>Par. Nos. 28, 62 | 31,32,35,41-45 |
| Y | & WO 97/43855 A1     & EP 0899950 A1 | 33,34,36-40 |
| Y | JP 11-196385 A (Jisedai Joho Hoso System Kenkyusho K.K.),<br>21 July, 1999 (21.07.99),<br>abstract   (Family: none) | 4 |
| Y | JP 8-331075 A (Sony Corporation),<br>13 December, 1996 (13.12.96),<br>Par. Nos. 43 to 50   (Family: none) | 5,33,34,36,37 |
| Y | JP 7-240726 A (Nippon Denso Co., Ltd.),<br>12 September, 1995 (12.09.95),<br>Par. No. 42   (Family: none) | 38-40 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 November, 2001 (16.11.01) | Date of mailing of the international search report<br>27 November, 2001 (27.11.01) |
|---|---|
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

| International application No. |
|---|
| PCT/JP01/07358 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-51374 A (Fujitsu Ten Limited), 20 February, 1996 (20.02.96), Par. No. 28 (Family: none) | 31-45 |

Form PCT/ISA/210 (continuation of second sheet) (July 1992)

## INTERNATIONAL SEARCH REPORT

International application No.

PCT/JP01/07358

| Box I   Observations where certain claims were found unsearchable (Continuation of item 1 of first sheet) |
|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box II   Observations where unity of invention is lacking (Continuation of item 2 of first sheet) |
|---|

This International Searching Authority found multiple inventions in this international application, as follows:

    The technical feature of the inventions of claims 1-30, 46 is to grasp
the status of the storage area of a reception terminal by simulation of the
status of the reception terminal by the transmission side.
    The technical feature of the inventions of claims 31-45 is to effectively
use a storage area by providing a storage area control unit to a reception
terminal.
    The inventions of claims 1-30, 46 and those of claims 31-45 do not satisfy
the requirement of unity of invention.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.

☒   No protest accompanied the payment of additional search fees.

Form PCT/ISA/210 (continuation of first sheet (1)) (July 1992)